# EUROPEAN PATENT SPECIFICATION

(11) **EP 3 210 516 B1**
(45) Date of publication and mention of the grant of the patent: **14.07.2021**
(21) Application number: 15851697.1
(22) Date of filing: 29.07.2015
(51) Int. Cl.: A47L 11/24

(54) **CLEANING ROBOT AND CHARGING BASE THEREOF**
REINIGUNGSROBOTER UND LADEBASIS DAFÜR
ROBOT DE NETTOYAGE ET SA BASE DE CHARGE

(30) Priority: 23.10.2014 CN 201410572043
(43) Date of publication of application: 30.08.2017
(73) Proprietor: Jiangsu Midea Cleaning Appliances Co., Ltd., Xiangcheng Economic Development Zone Suzhou, Jiangsu 215100 (CN); Midea Group Co., Ltd., Foshan, Guangdong 528311 (CN)
(72) Inventor: SHEN, Qiang, Suzhou Jiangsu 215100 (CN); PIAO, Yongzhe, Suzhou Jiangsu 215100 (CN)
(74) Representative: RGTH
(86) International application number: PCT/CN2015/085473
(87) International publication number: WO 2016/062145

(56) References cited:
- EP-A1- 2 449 938
- EP-A1- 2 658 073
- CN-A- 103 220 955
- CN-U- 201 469 183
- CN-U- 204 427 948
- KR-Y1- 200 366 079
- US-A1- 2014 184 144
- US-A1- 2014 184 144

## Description

### FIELD

The present disclosure relates to a field of cleaning devices, and more particularly to a robot cleaner and a charging base thereof.

### BACKGROUND

At present, a robot cleaner is equipped with a corresponding charging base. When a battery of a robot body of the robot cleaner is low, the robot body will be automatically homing to recharge. Generally, the charging base is placed on the ground, which occupies a large space. Furthermore, if the robot body passes the charging base when performing a cleaning task, the robot body will actively avoid the charging base. Therefore, the robot body cannot clean the ground near the charging base, particularly the ground below the charging base.

In the document US 2014 / 0184144 A1 docking stations for surface cleaning robots are disclosed, wherein a base having a robot receiving surface and a side wall extending from the base are provided. The receiving surface and the side wall define a holder or a housing for accommodating the robot, wherein at least one charging contact is disposed on the receiving surface for charging the robot. More specifically, the charging contact is located inside of the holder or the housing of the docking station, in such a way that the robot can only be charged when the robot is docked or inserted inside the holder.

### SUMMARY

The present disclosure seeks to solve one of the problems existing in the related art to at least some extent.

According to the present disclosure, a robot cleaner is provided. The robot cleaner at least can effectively clean the ground below a charging base.

Furthermore, a charging base for a robot cleaner is provided. The charging base can improve cleaning effect of the matched robot body on the ground below the charging base.

According to embodiments of the present disclosure, the robot cleaner includes a robot body provided with a first charging terminal; and a charging base provided with a second charging terminal matched with the first charging terminal; the charging base is fixed above the ground, and a bottom surface of the charging base is spaced apart from the ground so that the robot body can clean the ground below the charging base; the charging base defines an accommodating portion for accommodating the robot body and enabling the first charging terminal to contact the second charging terminal to form an electrical connection after the robot body is placed in the accommodating portion, wherein the second charging terminal is configured to be a charging sheet, and the charging sheet has a first end extending downward from the bottom surface of the charging base and a second end extending inwardly into the accommodating portion.

With the robot body of the robot cleaner according to embodiments of the present disclosure, the ground below the charging base can be effectively cleaned by the robot body of the robot cleaner, thereby improving the cleaning effect.

Furthermore, the robot cleaner according to embodiments of the present disclosure may further have the following additional technical features.

According to embodiments of the present disclosure, a distance between the bottom surface of the charging base and the ground is not less than a height of the robot body.

According to embodiments of the present disclosure, the charging base is attached to a wall perpendicular to the ground.

According to embodiments of the present disclosure, the charging base is disposed to a socket in the wall and is electrically connected to the socket.

According to embodiments of the present disclosure, the charging base is provided with a plug pin, and the charging base is positioned to the wall through a plug-in fit between the plug pin and the socket.

According to embodiments of the present disclosure, at least a portion of the second charging terminal is configured to be a charging sheet extending inwardly into the accommodating portion.

According to embodiments of the present disclosure, the charging base is provided with a homing transmitting device and the robot body is provided with a homing receiving device matched with the homing transmitting device.

According to embodiments of the present disclosure, the charging base includes a bottom plate portion, a first side plate portion and a second side plate portion; the first side plate portion and the second side plate portion are disposed to a front side and a rear side of the bottom plate portion respectively, and are opposite to each other, so as to define the accommodating portion among the first side plate portion, the second side plate portion and the bottom plate portion.

According to embodiments of the present disclosure, a support structure configured to support the charging base is disposed to the charging base.

According to embodiments of the present disclosure, the support structure is movable in an up-and-down direction relative to the charging base; when the robot body is placed downward in the accommodating portion, the robot body is configured to abut against the support structure and drive the support structure to move downward until a bottom surface of the support structure is supported on the ground.

According to embodiments of the present disclosure, a grip is disposed to the robot body.

According to embodiments of the present disclosure, the charging base for the robot cleaner is fixed above the ground, and a bottom surface of the charging base is spaced apart from the ground so that the robot body can clean the ground below the charging base; the charging base is provided with an accommodating portion for accommodating the robot body of the robot cleaner; the charging base is further provided with a charging terminal, and the charging terminal is configured to be a charging sheet extending inwardly into the accommodating portion, wherein the charging sheet preferably has a first end extending downward from the bottom surface of the charging base and a second end extending inwardly into the accommodating portion..

With the charging base according to embodiments of the present disclosure, the cleaning effect of the matched robot body on the ground below the charging base can be improved.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a schematic view of a robot cleaner according to an embodiment of the present disclosure;
Fig. 2 is a schematic view of a charging base for a robot cleaner according to an embodiment of the present disclosure;
Fig. 3 is a schematic view of a robot cleaner according to an embodiment of the present disclosure, in which a robot body is located in a charging base;
Fig. 4 is a partially enlarged view of a charging base according to an embodiment of the present disclosure;
Fig. 5 is a schematic view of a stretching process of a grip;
Fig. 6 is a schematic view of a charging terminal of a charging base;
Figs. 7 and 8 are partial schematic views of a robot cleaner according to another embodiment of the present disclosure.

### DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure.

In the specification, it is to be understood that terms such as "central," "upper," "lower," "front," "rear," "left," "right," "vertical," "horizontal," "top," "bottom," "inner," "outer," should be construed to refer to the orientation as then described or as shown in the drawings under discussion. These relative terms are for convenience of description and do not require that the present disclosure be constructed or operated in a particular orientation.

It should be noted that, terms such as "first" and "second" are used herein for purposes of description and are not intended to indicate or imply relative importance or significance or to imply the number of indicated technical features. Thus, the feature defined with "first" and "second" may comprise one or more of this feature. Further, in the description of the present disclosure, "a plurality of" means two or more than two, unless specified otherwise.

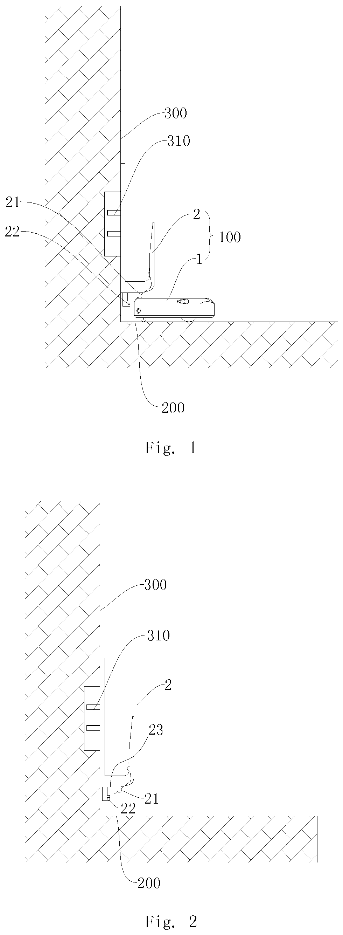

Referring to Figs. 1 to 8, a robot cleaner 100 according to embodiments of the present disclosure will be described in detail below. The robot cleaner 100 may be configured to clean an indoor ground, but is not limited thereto.

The robot cleaner 100 according to embodiments of the present disclosure may include a robot body 1 and a charging base 2. The robot body 1 may include components of a casing, a road wheel, a drive motor, a brush, etc.

The casing may be configured to be circular or substantially square, and the casing may be plastic. A bumper may be disposed to a front side of the casing, and a spring may be disposed between the bumper and the casing so that the spring can buffer the collision force that an obstacle applies on the robot body 1 when the casing collides with the obstacle, thereby protecting the robot body 1.

The casing may be provided with a dust collecting cup therein. The dust collecting cup may have at least one layer of filtering structure. A dust suction port is provided in a bottom surface 23 of the casing, and the dust suction port may be in communication with the dust collecting cup. A suction motor for producing negative pressure may be arranged behind the dust collecting cup. Under the action of the suction motor, the dust can be sucked into the dust collecting cup through the dust suction port. The dust collecting cup can be removed from the robot body 1 and the dust may be emptied after the robot cleaner 100 is used by a user for a period of time. Furthermore, the dust collecting cup and the filtering structure may be further cleaned regularly by the user.

Two sides of the dust collecting cup may be provided with a road wheel respectively, and each road wheel may be respectively driven by a separate drive motor. A universal wheel may be further disposed in front of the middle of the two road wheels, which has functions of supporting and steering. But the present disclosure is not limited thereto.

The brush may be disposed to a bottom of the casing and located in front of the two road wheels. The brush may be driven to rotate by a separate motor, and the dust at the bottom of the casing and two sides of the casing can be converged to the dust suction port by the brush so that the dust can be sucked into the dust collecting cup more effectively.

Certainly, it should be understood that, the above construction of the robot body 1 is well known by those skilled in the art, the above description is merely illustrative, and cannot be construed as a limitation on the robot body 1 according to embodiments of the present disclosure.

It should be understood that, the robot body 1 is further provided with a first charging terminal (not shown). The first charging terminal is matched with a second charging terminal 21 provided in the charging base 2 so that the robot body 1 may be charged by the charging base 2.

Referring to Figs. 1 and 2, the charging base 2 is fixed above the ground 200 and a bottom surface 23 of the charging base 2 is spaced apart from the ground 200. In other words, the charging base 2 is suspended relative to the ground just below the charging base 2, that is, the bottom surface 23 of the charging base 2 and the ground 200 just below the charging base 2 are spaced apart from each other. It should be noted that, the "ground 200" used herein may be construed as an upper surface of a floor below the charging base 2, an upper surface of a tile, and certainly may also be an upper surface of a carpet, but is not limited thereto.

Thus, the robot can clean the ground 200 below the charging base 2 because the bottom surface 23 of the charging base 2 is spaced apart from the ground 200. For example, the spacing between the charging base 2 and the ground 200 should at least satisfy that a side brush can freely rotate in a vertical space between the charging base 2 and the ground 200 so that the dust located on the ground 200 below the charging base 2 can be fully cleaned.

As an alternative embodiment, a distance between the bottom surface 23 of the charging base 2 and the ground 200 is not less than a height of the robot body 1. It should be noted herein that the height of the robot body 1 may be construed as a vertical distance between a top surface of the robot body 1 and the ground 200, when the robot body 1 is standing on the ground 200. As another alternative embodiment, the distance between the bottom surface 23 of the charging base 2 and the ground 200 is greater than the height of the robot body 1.

Thus, the robot body 1 can move below the charging base 2 wholly so that the ground 200 below the charging base 2 can be completely and effectively cleaned. Furthermore, the charging base 2 is arranged to be suspended relative to the ground 200, therefore, the robot body 1 does not need to deliberately avoid the charging base 2 when the robot body 1 moves to an area adjacent to the charging base 2, and the ground 200 around the charging base 2 can also be effectively cleaned.

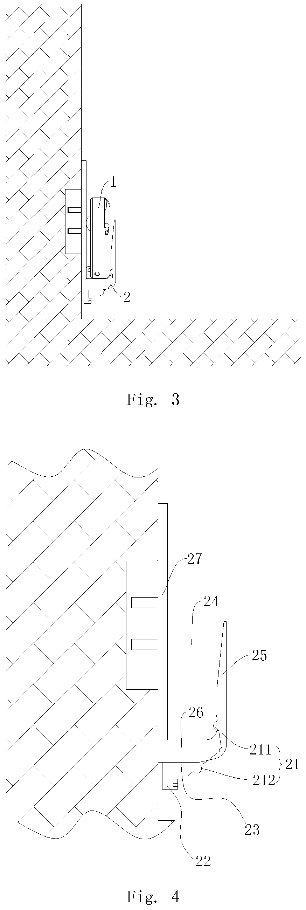

As shown in Figs. 1 to 3 in combination with Fig. 4, the charging base 2 defines an accommodating portion 24. The accommodating portion 24 is used to accommodate the robot body 1 (as shown in Fig. 3), and the first charging terminal contacts the second charging terminal 21 to form an electrical connection after the robot body 1 is placed in the accommodating portion 24 so that the robot body 1 can be charged by the charging base 2.

Thus, when the battery of the robot body 1 is low, the robot body 1 may give an alert signal to the user, for example, transmit low-battery information to the user in the form of an alert light. The user can place the robot body 1 in the accommodating portion 24 so that the two charging terminals are interconnected to form an electrical connection, and further the robot body 1 may be charged by the charging base 2.

In the robot cleaner 100 according to embodiments of the present disclosure, the charging base 2 is arranged to be suspended relative to the ground 200 so that the side brush of the robot cleaner 100 can clean the ground 200 below the charging base 2, or the robot body 1 can directly move to the ground 200 below the charging base 2 to clean the ground 200. Therefore, part of the cleaning blind zone of the robot cleaner 100 is eliminated, the cleaning function of the robot cleaner 100 is enhanced, and the cleaning effect thereof is improved.

Meanwhile, the robot body 1 can be located in the accommodating portion 24 when the robot body 1 is being charged. That is, the robot body 1 is located above the ground 200 so that the ground 200 below the charging base 2 still can be effectively cleaned by the other robot cleaners or other forms of vacuum cleaners, without occurring that the ground 200 below the robot cleaner 100 cannot be cleaned because the robot cleaner 100 is placed on the ground 200.

In some embodiments of the present disclosure, the charging base 2 may be directly attached to a wall 300 perpendicular to the ground 200. For example, the wall 300 is generally provided with a socket 310 therein, the charging base 2 is configured to be positioned to the socket 310 and to be electrically connected to the socket 310. Specifically, the charging base 2 may be provided with a plug pin, the plug pin can be plugged in a hole of the socket, the charging base 2 can be positioned to the wall 300 through a plug-in fit between the plug pin and the socket 310. Thus, the positioning of the charging base 2 can be achieved through the plug pin, and meanwhile the electrical connection to the socket 310 is achieved, which has a simple structure and easy maintenance.

However, it should be understood that the fitting mode between the charging base 2 and the wall 300 is not limited to the plug-in fitting mode above. For example, the charging base 2 may also be directly secured to the wall 300 or the socket 310 through a bolt or a screw. Certainly, a separate support may be further disposed to the wall 300 or the socket 310, and the charging base 2 may also be fixed to the support, as long as the charging base 2 is ensured to be spaced apart from the ground 200 just below it.

In some embodiments of the present disclosure, the charging base 2 is provided with a homing transmitting device 22, and the robot body 1 is provided with a homing receiving device matched with the homing transmitting device 22. It should be understood that, the specific construction and work principle of the homing transmitting device 22 and the homing receiving device are known from the art, and have been widely applied to the existing robot cleaners and charging bases. Therefore, special description and limitation will not be made to the homing transmitting device 22 and the homing receiving device herein.

By providing the homing transmitting device 22 and the homing receiving device, the robot body 1 can automatically find the charging base 2 and return to the charging base 2 for charging when the battery of the robot body 1 is low.

In some embodiments of the present disclosure, at least a portion of the second charging terminal 21 (e.g. the first charging sub-sheet 211) is configured to be a charging sheet extending inwardly into the accommodating portion 24. The first charging terminal of the robot body 1 can contact the said portion to form an electrical connection after the robot body 1 is placed in the accommodating portion 24 so that the robot body 1 can be charged by the charging base 2. The charging sheet may be a metal elastic sheet, which facilitates a butt connection, and ensures a reliable contact during the charging process.

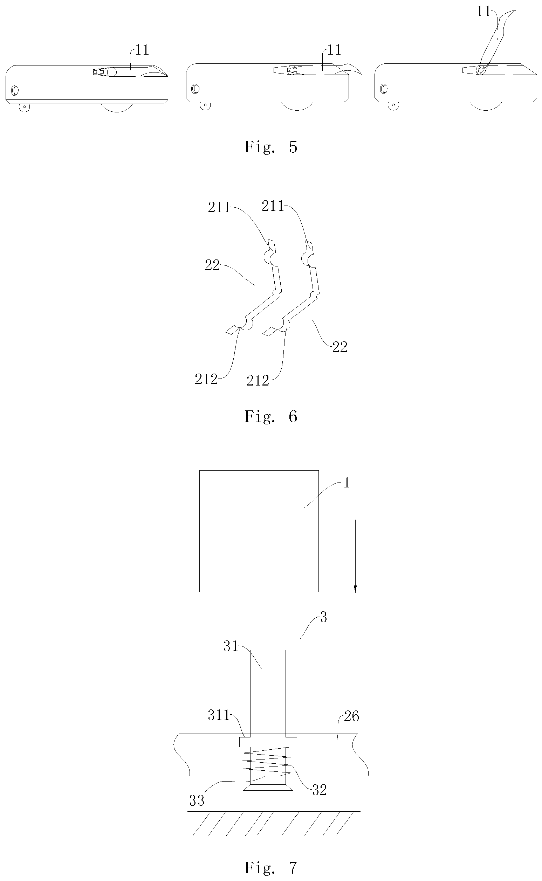

Alternatively, in some other embodiments, as shown in Fig. 4 in combination with Fig. 6, the second charging terminal 21 is configured to be a charging sheet, a first end of the charging sheet (e.g. a lower end) extends downward from a bottom surface of the charging base 2 to constitute a second charging sub-sheet 212, and a second end of the charging sheet (e.g. an upper end) extends inwardly into the accommodating portion 24 to constitute a first charging sub-sheet 211. In other words, in comparison with the above embodiments, a portion of the second charging terminal 21 according to the present embodiments extends inwardly into the accommodating portion 24 to form the first charging sub-sheet 211, and the other portion thereof may extend downward from the bottom surface of the charging base 2 and beyond the bottom surface 23 to form a second charging sub-sheet 212.

Accordingly, the robot body 1 can be directly placed in the accommodating portion 24 by the user so that the first charging terminal of the robot body 1 can contact the portion 211 of the second charging terminal 21 extending into the accommodating portion 24 to form an electrical connection, and further the robot body 1 can be charged.

Meanwhile, the robot body 1 can also move below the charging base 2 by itself under the guidance of the homing transmitting device 22 so that the first charging terminal of the robot body 1 can contact the portion 212 of the second charging terminal 21 extending downward beyond the bottom surface 23 to form an electrical connection, and further the robot body 1 can be charged.

In brief, in the present embodiments, not only can the robot body 1 be charged by being manually picked and placed by the user, but the robot body 1 can also achieve an automatic charging process through automatic homing, which enriches the charging methods and improves the practicality of the robot cleaner 100.

In some embodiments of the present disclosure, as shown in Fig. 4, the charging base 2 may include a bottom plate portion 26, a first side plate portion 25 and a second side plate portion 27. The first side plate portion 25 and the second side plate portion 27 are disposed to a front side and a rear side of the bottom plate portion 26 respectively. The first side plate portion 25 and the second side plate portion 27 are opposite to each other and may be disposed in parallel, the first side plate portion 25, the second side plate portion 27 and the bottom plate portion 26 together define the above-described accommodating portion 24, and the accommodating portion 24 may be configured as a space having open top, open left and open right, but it is not limited thereto.

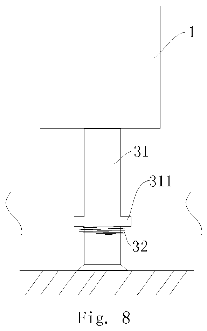

In some embodiments of the present disclosure, as described above, a charging method of the robot body 1 is to be placed in the accommodating portion 24 (as shown in Fig. 3), in which case the weight of the robot body 1 and the charging base 2 may be fully carried by the charging base 2. In order to improve the carrying capacity of the charging base 2 and prevent the charging base 2 from falling or even being damaged, as a preferred embodiment shown in Figs. 7 and 8, a support structure 3 configured to support the charging base 2 may be disposed to the charging base 2. The support structure 3 may be supported on the ground 200 after the robot body 1 is placed in the accommodating portion 24, thereby improving the stability of the charging base 2.

For example, the support structure 3 is movable in an up-and-down direction relative to the charging base 2. The robot body 1 is configured to abut against the support structure 3 and drive the support structure 3 to move downward until the support structure 3 is supported on the ground 200 when the robot body 1 is placed downward in the accommodating portion 24.

Specifically, a plurality of groups of support structures 3 is provided, and each group of the support structure 3 may include a support rob 31 and a spring 32. The spring 32 is fitted over the support rob 31, and an annular flange 311 may be disposed on an outer circumferential surface of the support rob 31. An upper end of the spring 32 elastically abuts against the annular flange 311 and a lower end of the spring 32 may elastically abut against an abutment surface 33 in the charging base 2. The spring 32 is normally in a compressed state to provide an upward elastic force applied on the support rob 31 so that an upper end of the support rob 31 can extend into the accommodating portion 24 through pushing effect of the spring in the condition that the support rod 31 is not subjected to other external forces. When the robot body 1 is placed in the accommodating portion 24 by the user, as shown in Figs. 7 and 8, the robot body 1 will abut against the upper end of the support rob 31 and push the support rob 31 to move downward until a bottom surface of the support rob 31 is supported on the ground so that the weight of the robot body 1 is at least partially shared by the support rob 31, and the stability of the charging base 2 is improved.

In order to facilitate lifting and pulling the robot body 1 by the user, a grip 11 may be disposed to the robot body 1. The grip 11 may be disposed to the casing of the robot body 1, for example, a containing groove may be disposed in the casing, and the grip 11 may be contained in the containing groove. The grip 11 can be firstly drawn and then turned relative to the robot body 1 so that the user can conveniently lift and pull the robot body 1 through the grip 11.

A charging base 2 of a robot cleaner 100 according to embodiments of the present disclosure will be described in detail below, and the charging base 2 is configured to charge the robot body 1 of the robot cleaner 100.

The charging base 2 is fixed above the ground 200 and a bottom surface 23 of the charging base 2 is spaced apart from the ground 200. In other words, the charging base 2 is disposed to be suspended relative to the ground just below the charging base 2, that is, the bottom surface 23 of the charging base 2 and the ground 200 just below the charging base 2 are spaced apart from each other. It should be noted that, the "ground 200" used herein may be construed as an upper surface of a floor below the charging base 2, an upper surface of a tile, and certainly may also be an upper surface of a carpet, but it is not limited thereto.

Thus, the robot can clean the ground 200 below the charging base 2 because the bottom surface 23 of the charging base 2 is spaced apart from the ground 200. For example, the spacing between the charging base 2 and the ground 200 should at least satisfy that a side brush can freely rotate in a vertical space between the charging base 2 and the ground 200 so that the dust located on the ground 200 below the charging base 2 can be fully cleaned.

As an alternative embodiment, a distance between the bottom surface 23 of the charging base 2 and the ground 200 is not less than a height of the robot body 1. It should be noted herein that the height of the robot body 1 may be construed as a vertical distance between a top surface of the robot body 1 and the ground 200, when the robot body 1 is standing on the ground 200. As another alternative embodiment, the distance between the bottom surface 23 of the charging base 2 and the ground 200 is greater than the height of the robot body 1.

Thus, the robot body 1 can move below the charging base 2 wholly so that the ground 200 below the charging base 2 can be completely and effectively cleaned. Furthermore, the charging base 2 is arranged to be suspended relative to the ground 200, therefore, the robot body 1 does not need to deliberately avoid the charging base 2 when the robot body 1 moves to an area adjacent to the charging base 2, and the ground 200 around the charging base 2 can also be effectively cleaned.

As shown in Figs. 1 to 3 in combination with Fig. 4, the charging base 2 defines an accommodating portion 24. The accommodating portion 24 is used to accommodate the robot body 1 (as shown in Fig. 3), the charging base 2 may be provided with a charging terminal (i.e. the second charging terminal 21), and the charging terminal of the charging base 2 is configured to be matched with the charging terminal of the robot body 1 (i.e. the first charging terminal). Preferably, the charging terminal of the charging base 2 contacts the charging terminal of the robot body 1 to form an electrical connection after the robot body 1 is placed in the accommodating portion 24, thus the robot body 1 can be charged by the charging base 2.

In some embodiments of the present disclosure, at least a portion (e.g. the first charging sub-sheet 211) of the charging terminal of the charging base 2 (e.g. the second charging terminal 21) is configured to be a charging sheet extending inwardly into the accommodating portion 24. Preferably, the charging terminal of the robot body 1 can contact the said portion to form an electrical connection after the robot body 1 is placed in the accommodating portion 24 so that the robot body 1 can be charged by the charging base 2. The charging sheet may be a metal elastic sheet, which facilitates a butt connection, and ensures a reliable contact during the charging process.

Alternatively, as shown in Fig. 4, in some embodiments, the charging terminal of the charging base 2 (i.e. the second charging terminal 21) is configured to be a charging sheet, a first end of the charging sheet (e.g. a lower end) extends downward from the bottom surface of the charging base 2 to constitute a second charging sub-sheet 212, and a second end of the charging sheet (e.g. an upper end) extends inwardly into the accommodating portion 24 to constitute a first charging sub-sheet 211. In other words, in comparison with the above embodiments, a portion of the charging terminal of the charging base 2 of the present embodiments extends inwardly into the accommodating portion 24 to form the first charging sub-sheet 211, and the other portion thereof may extend downward from the bottom surface of the charging base 2 and beyond the bottom surface 23 to form a second charging sub-sheet 212.

Accordingly, the robot body 1 can be directly placed in the accommodating portion 24 by the user so that the charging terminal of the robot body 1 can contact the portion 211 of the charging terminal of charging base 2 extending into the accommodating portion 24 to form an electrical connection, and further the robot body 1 can be charged.

Meanwhile, the robot body 1 can also move below the charging base 2 by itself under the guidance of the homing transmitting device 22 so that the charging terminal of the robot body 1 can contact the portion 212 of the charging terminal of the charging base 2 extending downward beyond the bottom surface 23 to form an electrical connection, and further the robot body 1 can be charged.

In some embodiments of the present disclosure, the charging base 2 may be directly attached to a wall 300 perpendicular to the ground 200. For example, the wall 300 is generally provided with a socket 310 therein, the charging base 2 is configured to be positioned to the socket 310 and to be electrically connected to the socket 310. Specifically, the charging base 2 may be provided with a plug pin, the plug pin can be plugged in a hole of the socket, the charging base 2 can be positioned to the wall 300 through a plug-in fit between the plug pin and the socket 310. Thus, the positioning of the charging base 2 can be achieved through the plug pin, and meanwhile the electrical connection to the socket 310 is achieved, which has a simple structure and easy maintenance.

However, it should be understood that the fitting mode between the charging base 2 and the wall 300 is not limited to the plug-in fitting mode above. For example, the charging base 2 may also be directly secured to the wall 300 or the socket 310 through a bolt or a screw. Certainly, a separate support may be further disposed to the wall 300 or the socket 310, and the charging base 2 may also be fixed to the support, as long as the charging base 2 is ensured to be spaced apart from the ground 200 just below it.

In some embodiments of the present disclosure, the charging base 2 is provided with a homing transmitting device 22, and the robot body 1 is provided with a homing receiving device matched with the homing transmitting device 22. It should be understood that, the specific construction and work principle of the homing transmitting device 22 and the homing receiving device are known from the art, and have been widely applied to the existing robot cleaners and charging bases. Therefore, special description and limitation will not be made to the homing transmitting device 22 and the homing receiving device.

By providing the homing transmitting device 22 and the homing receiving device, the robot body 1 can automatically find the charging base 2 and return to the charging base 2 for charging when the battery of the robot body 1 is low.

In some embodiments of the present disclosure, as shown in Fig. 4, the charging base 2 may include a bottom plate portion 26, a first side plate portion 25 and a second side plate portion 27. The first side plate portion 25 and the second side plate portion 27 are disposed to a front side and a rear side of the bottom plate portion 26 respectively. The first side plate portion 25 and the second side plate portion 27 are opposite to each other and may be disposed in parallel, the first side plate portion 25, the second side plate portion 27 and the bottom plate portion 26 together define the above-described accommodating portion 24, and the accommodating portion 24 may be configured as a space having open top, open left and open right, but it is not limited thereto.

In some embodiments of the present disclosure, as described above, a charging method of the robot body 1 is to be placed in the accommodating portion 24 (as shown in Fig. 3), in which case the weight of the robot body 1 and the charging base 2 may be fully carried by the charging base 2. In order to improve the carrying capacity of the charging base 2 and prevent the charging base 2 from falling or even being damaged, as a preferred embodiment shown in Figs. 7 and 8, a support structure 3 configured to support the charging base 2 may be disposed to the charging base 2. The support structure 3 may be supported on the ground 200 after the robot body 1 is placed in the accommodating portion 24, thereby improving the stability of the charging base 2.

For example, the support structure 3 is movable in an up-and-down direction relative to the charging base 2. The robot body 1 is configured to abut against the support structure 3 and drive the support structure 3 to move downward until the support structure 3 is supported on the ground 200 when the robot body 1 is placed downward in the accommodating portion 24.

Specifically, a plurality of groups of support structures 3 is provided, and each group of the support structure 3 may include a support rob 31 and a spring 32. The spring 32 is fitted over the support rob 31, and an annular flange 311 may be disposed on an outer circumferential surface of the support rob 31. An upper end of the spring 32 elastically abuts against the annular flange 311 and a lower end of the spring 32 may elastically abut against an abutment surface 33 in the charging base 2. The spring 32 is normally in a compressed state to provide an upward elastic force applied on the support rob 31 so that an upper end of the support rob 31 can extend into the accommodating portion 24 through pushing effect of the spring in the condition that the support rod 31 is not subjected to other external forces. When the robot body 1 is placed in the accommodating portion 24 by the user, as shown in Figs. 7 and 8, the robot body 1 will abut against the upper end of the support rob 31 and push the support rob 31 to move downward until a bottom surface of the support rob 31 is supported on the ground so that the weight of the robot body 1 is at least partially shared by the support rob 31, and the stability of the charging base 2 is improved.

In order to facilitate lifting and pulling the robot body 1 by the user, a grip 11 may be disposed to the robot body 1. The grip 11 may be disposed to the casing of the robot body 1, for example, a containing groove may be disposed in the casing, and the grip 11 may be contained in the containing groove. The grip 11 can be firstly drawn and then turned relative to the robot body 1 so that the user can conveniently lift and pull the robot body 1 through the grip 11.

Reference throughout this specification to "an embodiment," "some embodiments," "an illustrative embodiment," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples.

Although embodiments of the present disclosure have been shown and illustrated, it shall be understood by those skilled in the art that various changes, modifications, alternatives and variants without departing from the principle of the present disclosure are acceptable. The scope of the present disclosure is defined by the claims or the like.

## Claims

1. A robot cleaner (100), comprising:
a robot body (1) provided with a first charging terminal; and
a charging base (2) provided with a second charging terminal (21) matched with the first charging terminal; wherein the charging base (2) is fixed above ground (200), and a bottom surface (23) of the charging base (2) is spaced apart from the ground (200) so that the robot body (1) can clean the ground below the charging base (2); the charging base (2) defines an accommodating portion (24) for accommodating the robot body and enabling the first charging terminal to contact the second charging terminal (21) to form an electrical connection after the robot body (1) is placed in the accommodating portion (24),
**characterized in that:**
the second charging terminal (21) is configured to be a charging sheet, and the charging sheet has a first end extending downward from the bottom surface (23) of the charging base (2) and a second end extending inwardly into the accommodating portion (24).

2. The robot cleaner according to claim 1, wherein a distance between the bottom surface (23) of the charging base (2) and the ground (200) is not less than a height of the robot body (1).

3. The robot cleaner according to claim 1 or 2, wherein the charging base (2) is attached to a wall (300) perpendicular to the ground (200).

4. The robot cleaner according to claim 3, wherein the charging base (2) is disposed to a socket (310) in the wall (300) and is electrically connected to the socket (310).

5. The robot cleaner according to claim 4, wherein the charging base (2) is provided with a plug pin, and the charging base (2) is positioned to the wall (300) through a plug-in fit between the plug pin and the socket (310).

6. The robot cleaner according to claim 1 or 2, wherein at least a portion of the second charging terminal (21) is configured to be a charging sheet extending inwardly into the accommodating portion (24).

7. The robot cleaner according to claim 1 or 2, wherein the charging base (2) is provided with a homing transmitting device (22) and the robot body is provided with a homing receiving device matched with the homing transmitting device (22).

8. The robot cleaner according to claim 1 or 2, wherein the charging base (2) comprises a bottom plate portion (26), a first side plate portion (25) and a second side plate portion (27); the first side plate portion (25) and the second side plate portion (27) are disposed to a front side and a rear side of the bottom plate portion (26) respectively, and are opposite to each other, so as to define the accommodating portion (24) among the first side plate portion (25), the second side plate portion (27) and the bottom plate portion (26).

9. The robot cleaner according to claim 1 or 2, wherein a support structure (3) configured to support the charging base (2) is disposed to the charging base.

10. The robot cleaner according to claim 9, wherein the support structure (3) is movable in an up-and-down direction relative to the charging base (2); when the robot body (1) is placed downward in the accommodating portion (24), the robot body (1) is configured to abut against the support structure (3) and drive the support structure (3) to move downward until a bottom surface of the support structure (3) is supported on the ground.

11. The robot cleaner according to claim 1, wherein a grip (11) is disposed to the robot body (1).

12. A charging base for a robot cleaner (100) according to claim 1, wherein the charging base (2) is fixed above the ground (200), and a bottom surface (23) of the charging base (2) is spaced apart from the ground so that the robot body (1) can clean the ground (200) below the charging base(2); the charging base (2) is provided with an accommodating portion (24); the charging base (2) is further provided with a charging terminal, and the charging terminal is configured to be a charging sheet extending inwardly into the accommodating portion (24), wherein the charging sheet has a first end extending downward from the bottom surface (23) of the charging base (2) and a second end extending inwardly into the accommodating portion (24).

## Patentansprüche

1. Roboterreiniger (100), umfassend:
einen Roboterkörper (1), der mit einem ersten Ladeanschluss versehen ist; und eine Ladestation (2), die mit einem zweiten Ladeanschluss (21) versehen ist, der auf den ersten Ladeanschluss abgestimmt ist; wobei die Ladestation (2) über dem Boden (200) befestigt ist, und eine Bodenfläche (23) der Ladestation (2) vom Boden (200) beabstandet ist, so dass der Roboterkörper (1) den Boden unter der Ladestation (2) reinigen kann; die Ladestation (2) einen Aufnahmebereich (24) zum Aufnehmen des Roboterkörpers definiert und es dem ersten Ladeanschluss ermöglicht, den zweiten Ladeanschluss (21) zu berühren, um eine elektrische Verbindung herzustellen, nachdem der Roboterkörper (1) in den Aufnahmebereich (24) platziert wurde,
**dadurch gekennzeichnet, dass**
der zweite Ladeanschluss (21) als Ladeblatt ausgebildet ist und das Ladeblatt ein erstes Ende aufweist, das sich von der Bodenfläche (23) der Ladestation (2) nach unten erstreckt, und ein zweites Ende, das sich nach innen in den Aufnahmebereich (24) erstreckt.

2. Roboterreiniger gemäß Anspruch 1, wobei ein Abstand zwischen der Bodenfläche (23) der Ladestation (2) und dem Boden (200) nicht kleiner als eine Höhe des Roboterkörpers (1) ist.

3. Roboterreiniger gemäß Anspruch 1 oder 2, wobei die Ladestation (2) an einer Wand (300) senkrecht zum Boden (200) angebracht ist.

4. Roboterreiniger gemäß Anspruch 3, wobei die Ladestation (2) an einer Steckdose (310) in der Wand (300) angeordnet und elektrisch mit der Steckdose (310) verbunden ist.

5. Roboterreiniger gemäß Anspruch 4, wobei die Ladestation (2) mit einem Steckerstift versehen ist, und die Ladestation (2) durch eine Steckverbindung zwischen dem Steckerstift und der Steckdose (310) an der Wand (300) positioniert ist.

6. Roboterreiniger gemäß Anspruch 1 oder 2, wobei mindestens ein Bereich des zweiten Ladeanschlusses (21) als Ladeblatt ausgebildet ist, das sich nach innen in den Aufnahmebereich (24) erstreckt.

7. Roboterreiniger gemäß Anspruch 1 oder 2, wobei die Ladestation (2) mit einer Leitübertragungsvorrichtung (22) versehen ist und der Roboterkörper mit einer Leitempfangsvorrichtung versehen ist, die mit der Leitübertragungsvorrichtung (22) abgestimmt ist.

8. Roboterreiniger gemäß Anspruch 1 oder 2, wobei die Ladestation (2) einen Bodenplattenbereich (26), einen ersten Seitenplattenbereich (25) und einen zweiten Seitenplattenbereich (27) umfasst; der erste Seitenplattenbereich (25) und der zweite Seitenplattenbereich (27) an einer Vorderseite bzw. einer Rückseite des Bodenplattenbereichs (26) angeordnet und einander gegenüberliegen, um den Aufnahmebereich (24) zwischen dem ersten Seitenplattenbereich (25), dem zweiter Seitenplattenbereich (27) und dem Bodenplattenbereich (26) zu definieren.

9. Roboterreiniger gemäß Anspruch 1 oder 2, wobei eine Tragstruktur (3), die zum Tragen der Ladestation (2) ausgebildet ist, an der Ladestation angeordnet ist.

10. Roboterreiniger nach Anspruch 9, wobei die Tragstruktur (3) in einer Auf- und Ab-Richtung relativ zur Ladestation (2) beweglich ist; wenn der Roboterkörper (1) in dem Aufnahmebereich (24) nach unten angeordnet ist, der Roboterkörper (1) so ausgebildet ist, dass er an der Tragstruktur (3) anliegt und die Tragstruktur (3) so antreibt, dass sie sich nach unten bewegt, bis eine Bodenfläche der Tragstruktur (3) auf dem Boden abgestützt ist.

11. Roboterreiniger gemäß Anspruch 1, wobei ein Griff (11) an dem Roboterkörper (1) angeordnet ist.

12. Ladestation für einen Roboterreiniger (100) gemäß Anspruch 1, wobei die Ladestation (2) über dem Boden (200) befestigt ist und eine Bodenfläche (23) der Ladestation (2) vom Boden beabstandet ist, so dass der Roboterkörper (1) den Boden (200) unter der Ladestation (2) reinigen kann; die Ladestation (2) mit einem Aufnahmebereich (24) versehen ist; die Ladestation (2) ferner mit einem Ladeanschluss versehen ist, und der Ladeanschluss als Ladeblatt ausgebildet ist, das sich nach innen in den Aufnahmebereich (24) erstreckt, wobei das Ladeblatt ein erstes Ende, das sich von der Bodenfläche (23) der Ladestation (2) nach unten erstreckt, und ein zweites Ende, das sich nach innen in den Aufnahmebereich (24) erstreckt, aufweist.

## Revendications

1. Robot de nettoyage (100) comprenant :
un corps de robot (1) pourvu d'une première borne de chargement ; et
une base de chargement (2) pourvue d'une deuxième borne de chargement (21) correspondant à la première borne de chargement ; dans lequel la base de chargement (2) est fixée au-dessus du sol (200), et une surface de fond (23) de la base de chargement (2) est espacée du sol (200) de telle façon que le corps de robot (1) peut nettoyer le sol sous la base de chargement (2) ; la base de chargement (2) définit une partie de logement (24) destinée à accueillir le corps de robot et permettant à la première borne de chargement d'entrer en contact avec la deuxième borne de chargement (21) pour former une connexion électrique une fois que le corps de robot (1) a été placé dans la partie de logement (24),
**caractérisé en ce que** :
la deuxième borne de chargement (21) est configurée pour être une feuille de chargement, et la feuille de chargement présente une première extrémité s'étendant vers le bas à partir de la surface de fond (23) de la base de chargement (2) et une deuxième extrémité s'étendant vers l'intérieur dans la partie de logement (24).

2. Robot de nettoyage selon la revendication 1, dans lequel une distance entre la surface de fond (23) de la base de chargement (2) et le sol (200) n'est pas inférieure à une hauteur du corps de robot (1).

3. Robot de nettoyage selon la revendication 1 ou 2, dans lequel la base de chargement (2) est fixée à un mur (300) perpendiculaire au sol (200).

4. Robot de nettoyage selon la revendication 3, dans lequel la base de chargement (2) est disposée sur une prise (310) dans le mur (300) et connectée électriquement à la prise (310).

5. Robot de nettoyage selon la revendication 4, dans lequel la base de chargement (2) est dotée d'une broche de fiche, et la base de chargement (2) est positionnée sur le mur (300) par ajustement à enfichage entre la broche de fiche et la prise (310).

6. Robot de nettoyage selon la revendication 1 ou 2, dans lequel au moins une partie de la deuxième borne de chargement (21) est configurée pour être une feuille de chargement s'étendant vers l'intérieur dans la partie de logement (24).

7. Robot de nettoyage selon la revendication 1 ou 2, dans lequel la base de chargement (2) est dotée d'un dispositif de transmission de localisation (22) et le corps de robot est doté d'un dispositif de réception de localisation correspondant au dispositif de transmission de localisation (22).

8. Robot de nettoyage selon la revendication 1 ou 2, dans lequel la base de chargement (2) comprend une partie de plaque inférieure (26), une première partie de plaque latérale (25) et une deuxième partie de plaque latérale (27) ; la première partie de plaque latérale (25) et la deuxième partie de plaque latérale (27) sont disposées sur un côté avant et un côté arrière de la partie de plaque inférieure (26) respectivement, et sont opposées l'une à l'autre, de manière à définir la partie de logement (24) parmi la première partie de plaque latérale (25), la deuxième partie de plaque latérale (27) et la partie de plaque inférieure (26).

9. Robot de nettoyage selon la revendication 1 ou 2, dans lequel une structure de support (3) configurée pour supporter la base de chargement (2) est disposée sur la base de chargement.

10. Robot de nettoyage selon la revendication 9, dans lequel la structure de support (3) est déplaçable dans une direction vers le haut et vers le bas par rapport à la base de chargement (2) ; lorsque le corps de robot (1) est placé vers le bas dans la partie de logement (24), le corps de robot (1) est configuré pour buter contre la structure de support (3) et amener la structure de support (3) à se déplacer vers le bas jusqu'à ce qu'une surface de fond de la structure de support (3) s'appuie sur le sol.

11. Robot de nettoyage selon la revendication 1, dans lequel une poignée (11) est disposée sur le corps de robot (1).

12. Base de chargement pour un robot de nettoyage (100) selon la revendication 1, dans lequel la base de chargement (2) est fixée au-dessus du sol (200), et une surface de fond (23) de la base de chargement (2) est espacée du sol, de sorte que le corps de robot (1) peut nettoyer le sol (200) sous la base de chargement (2) ; la base de chargement (2) est dotée d'une partie de logement (24) ; la base de chargement (2) est en outre dotée d'une borne de chargement, et la borne de chargement est configurée pour être une feuille de chargement s'étendant vers l'intérieur dans la partie de logement (24), dans laquelle la feuille de chargement présente une première extrémité s'étendant vers le bas à partir de la surface de fond (23) de la base de chargement (2) et une deuxième extrémité s'étendant vers l'intérieur dans la partie de logement (24).
